# EUROPÄISCHE PATENTSCHRIFT

(11) **EP 0 522 259 B1**
(45) Veröffentlichungstag und Bekanntmachung des Hinweises auf die Patenterteilung: **19.04.1995**
(21) Anmeldenummer: 92108023.0
(22) Anmeldetag: 13.05.1992
(51) Int. Cl.: C09K 5/06

(54) **Füllmedium für einen dynamischen Latentwärmespeicher**
Filling medium for a dynamic latent heat storage apparatus
Matière de remplissage pour un stockage de chaleur latente dynamique

(30) Priorität: 09.07.1991 DE 4122659
(43) Veröffentlichungstag der Anmeldung: 13.01.1993
(73) Patentinhaber: Herrmann Wärmesysteme GmbH, 58239 Schwerte (DE)
(72) Erfinder: Fieback, Klaus, Dr. Ing., O-1156 Berlin (DE); Ahrens, Wolfgang, Dr. Ing., W-1000 Berlin 42 (DE); Krämer, Thomas, W-6962 Adelsheim (DE)
(74) Vertreter: Patentanwälte Meinke, Dabringhaus und Partner

(56) Entgegenhaltungen:
- DE-A- 3 147 178
- US-A- 4 561 989

## Beschreibung

Die Erfindung betrifft ein Füllmedium für einen dynamischen Latentwärmespeicher, bei welchem der Wärmetransport an ein organisches Speichermaterial über Siede- und Kondensationsprozesse einer Wärmetransportflüssigkeit realisiert wird, die in direktem Kontakt mit dem Speichermaterial steht.

Derartige Speicher werden in Heizungsanlagen eingesetzt und sichern einen kontinuierlichen, energiesparenden Kesselbetrieb und verringern die Wartungs- und Energiekosten. Sie sind zur Anpassung von Anfall- und Umweltenergiesystemen an mögliche Wärmeverbraucher einsetzbar, insbesondere bei der Nutzung von Industrieabwärme in Verbindung mit Fernwärmesystemen und bei der Nutzung von Wärme aus Motorenabgasen.

Ein gattungsgemäßes Füllmedium für einen Latentwärmespeicher ist aus DD 280 113 A1 bekannt. Dabei wird ein organisches Speichermaterial mit einem Wärmetransportmittel in direkten Kontakt gebracht, wobei die thermische Be- und Entladung des Speichermaterials über Siede- und Kondensationsprozesse erfolgt. Dazu ist ein oberflächenaktiver Stoff hinzugefügt, der ausschließlich am Prozeß der Entladung teilnimmt. Dieser Stoff bewirkt die Bildung kleiner Kristalle und verhindert hierdurch die Bildung von großvolumigen und undurchlässigen Agglomeraten. Damit wird erreicht, daß für den Siede- und Kondensationsprozeß während der Entladung stets ein genügend großer Querschnitt zur Dampf- bzw. Kondensatdurchströmung des Wärmetransportmittels durch den festen Anteil des Speichermaterials freibleibt und keine Beeinträchtigung der Wärmeübertragungsleistungen stattfindet. Als zusätzliche Stoffe werden oberflächenaktive Stoffe, insbesondere flüssige Tenside, eingesetzt.

Aus der DE-27 41 829 A1 ist ein Latentwärmespeicher bekannt, dessen Füllmedium aus ummantelten Paraffinteilchen und Wasser als Wärmetransportflüssigkeit besteht. Zwischen Wasser und Paraffin besteht somit kein direkter Kontakt und das Wasser wird ausschließlich zur konvektiven thermischen Be- und Entladung des Speichermateriales verwendet. Siede- und Kondensationsprozesse zum Be- und Entladen sind daher ausgeschlossen. Da lediglich ein konvektiver Wärmeaustausch stattfindet, sind mit einem derartigen Speicher nur recht schlechte Wärmeübertragungsleistungen zu erzielen.

Aufgabe der Erfindung ist es, ein Speicherfüllmedium für einen dynamischen Latentwärmespeicher zu schaffen, das bei Aufrechterhaltung großer Wärmeübertragungsleistungen für den Speicher bei den Siedeprozessen sowohl bei der Beladung als auch bei der Entladung einwandfrei arbeitet, wobei das Speichermedium gleichzeitig umweltverträglich und nicht giftig sein soll.

Diese Aufgabe wird mit einem Füllmedium der eingangs bezeichneten Art erfindungsgemäß dadurch gelöst, daß es aus 3 bis 30 Vol. % Wasser, 40 bis 90 Vol. % aus einem mit Wasser nicht löslichen und nicht gesundheitsgefährdenden schmelzbaren Stoff und 0,5 bis 3,0 Vol. % Siedekörpern besteht.

Es wurde überraschend gefunden, daß ein solches, aus drei unterschiedlichen Substanzen bestehendes Füllmedium sowohl eine hohe Wärmeübertragungsleistung aufweist als auch umweltverträglich und ungiftig ist. Dabei wurde das Problem überwunden, das Wasser in einem dafür geeigneten thermodynamischen System sehr stark zu Siedeverzügen neigt, die das technische System durch erhebliche Druckstöße erschüttert, in dem zusätzlich Siedekörper vorgesehen sind. Diese Körper verhindern überraschend bei den Siedeprozessen der Beladung als auch bei den Siedeprozessen der Entladung das Auftreten von Siedeverzügen. Es ist zwar bekannt, eine siedeverzugverhindernde Wirkung von Siedekörpern dann zu erwarten, wenn über der siedenden Flüssigkeit ein vom Dampf der Flüssigkeit erfüllter freier Raum oder allgemein ein Raum vorhanden ist, in welchen der beim Sieden freiwerdende Dampf entweichen kann. Beim erfindungsgemäßen Speichermedium befindet sich auf der Oberfläche der siedenden Flüssigkeit jedoch stets flüssiges oder festes schmelzbares Material in der Höhe der Befüllung des Speichermoduls mit dem Material. Ein Entweichen des Dampfes ist deshalb nicht möglich, besonders dann nicht, wenn im Zustand der vollständigen thermischen Entladung die Flüssigkeitsoberfläche vollständig vom festen Material abgedeckt und verschlossen ist. Bei Erwärmung des Wassers beim Beladen ist deshalb eigentlich mit einer schlagartigen Verdampfung des Wassers beim Erreichen einer entsprechend hohen Verdampfungstemperatur und eines entsprechenden Verdampfungsdruckes zu rechnen. Diese Reaktion tritt jedoch überraschend nicht ein. Bevor es zu einer schlagartigen Verdampfung kommt, setzt eine Bildung feiner Dampfbläschenströme ein, durch welche sehr schnell freie Kanäle im festen Material aufgeschmolzen werden. Diese Kanäle bilden die erforderlichen Freiräume, in welchen der sich bildende Dampf entweichen und an den dort vorhandenen Oberflächen des festen Materials kondensieren kann. Beim Entladen werden durch die Dampfbläschenströme Zusammenbackungen der zu erstarrenden festen Teilchen verhindert, wodurch ebenfalls freie und durchgängige Querschnitte mit entsprechenden Freiräumen erhalten bleiben. Die Siedekörper können somit aufgewirbelt werden und gelangen auch innerhalb des festen Anteils des Speichermaterials.

In vorteilhafter Ausgestaltung der Erfindung ist vorgesehen, daß der mit Wasser nicht lösliche und nicht gesundheitsgefährdende schmelzbare Stoff aus aliphatischen Kohlenwasserstoffen C₁₆ bis C₄₆ besteht.

Es hat sich herausgestellt, daß derartige Kohlenwasserstoffe, insbesondere Paraffine, besonders geeignet sind, da sie eine besonders gute Wärmespeicherfähigkeit besitzen.

Dabei ist besonders bevorzugt vorgesehen, daß die Siedekörper aus Glaskörpern bestehen. Diese Glaskörper reagieren nicht mit den beiden anderen Substanzen und verhindern den Siedeverzug des als Wärmetransportflüssigkeit dienenden Wassers.

Dabei sind die Siedekörper vorteilhaft in Größe, Form und Gewicht derart ausgebildet, daß sie während der Siede- und Kondensationsprozesse in das Speichermaterial hineinbewegbar sind. Die Siedekörper können dann beim Siedeprozeß ausgewirbelt werden und auch in den festen Anteil des Speichermaterials gelangen, so daß Siedeverzüge des Wassers im Gesamtsystem vollständig ausgeschlossen sind.

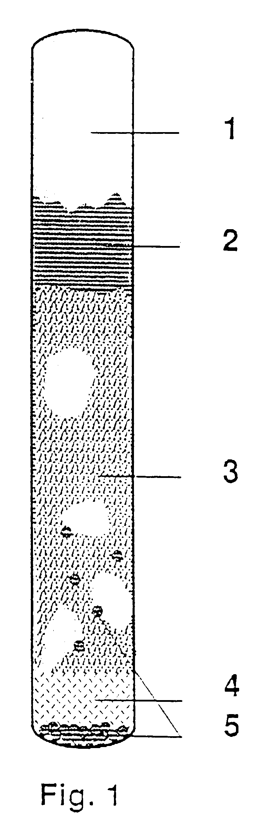

Die Erfindung ist nachstehend anhand der Zeichnung beispielsweise näher erläutert. Diese zeigt in der einzigen Figur in einem Schnitt ein in einem Latentwärmespeicher angeordnetes Füllmedium nach der Erfindung.

Ein Speichermodul eines dynamischen Latentwärmespeichers ist in der Zeichnung nur vereinfacht wiedergegeben. Das Speichermodul ist mit einem Füllmedium gefüllt, das aus drei unterschiedlichen Komponenten besteht, nämlich aus Wasser als Wärmetransportflüssigkeit, einem nicht wasserlöslichen, schmelzbaren Stoff, insbesondere Paraffin, und Glaskörpern als Siedekörper.

Die einzelnen Substanzen des Füllmediums teilweise in unterschiedlichen Aggregatzuständen sind von oben nach unten fortlaufend bezeichnet. Im oberen Bereich des Speichermoduls befindet sich dampfförmiges Wasser 1, darunter geschmolzenes Speichermaterial 2 und unterhalb dessen festes Speichermaterial 3. Dabei befindet sich in den Hohlräumen des festen Speichermaterials 3 ebenfalls dampfförmiges Wasser 1. Unterhalb des festen Speichermaterials 3 im Bodenbereich des Speichermoduls liegt flüssiges Wasser 4 vor. Im flüssigen Wasser 4 sind eine Mehrzahl von Siedekörpern (Glaskörpern 5) angeordnet, die beim Siedevorgang ausgewirbelt und sich teilweise auch innerhalb des festen Speichermaterials 3 befinden, wie dies in der Zeichnung dargestellt ist.

Eine bevorzugte Zusammensetzung des Füllmediums besteht aus 30 Vol. % Wasser, 69 Vol. % Hartparaffin und 1 Vol. % Glasperlen.

Natürlich ist die Erfindung nicht auf das Ausführungsbeispiel beschränkt. Weitere Ausgestaltungen der Erfindung sind möglich, ohne den Grundgedanken zu verlassen. So können auch andere Siedekörper als Glasperlen eingesetzt werden und insbesondere können andere organische, nicht wasserlösliche Substanzen verwendet werden und dgl. mehr.

## Patentansprüche

1. Füllmedium für einen dynamischen Latentwärmespeicher, bei welchem der Wärmetransport an ein organisches Speichermaterial über Siede- und Kondensationsprozesse einer Wärmetransportflüssigkeit realisiert wird, die in direktem Kontakt mit dem Speichermaterial steht,
dadurch gekennzeichnet,
daß es aus 3 bis 30 Vol. % Wasser, 40 bis 90 Vol. % aus einem mit Wasser nicht löslichen und nicht gesundheitsgefährdenden schmelzbaren Stoff und 0,5 bis 3,0 Vol. % Siedekörpern besteht.

2. Füllmedium nach Anspruch 1,
dadurch gekennzeichnet,
daß der mit Wasser nicht lösliche und nicht gesundheitsgefährdende schmelzbare Stoff aus aliphatischen Kohlenwasserstoffen C₁₆ bis C₄₆ besteht.

3. Füllmedium nach Anspruch 2,
dadurch gekennzeichnet,
daß die Siedekörper aus Glaskörpern bestehen.

4. Füllmedium nach Anspruch 1 oder einem der folgenden,
dadurch gekennzeichnet,
daß die Siedekörper in Größe, Form und Gewicht derart ausgebildet sind, daß sie während der Siede- und Kondensationsprozesse in das Speichermaterial hineinbewegbar sind.

## Claims

1. Filling medium for a dynamic latent heat storage device in which the heat transfer to an organic storage material is achieved through a boiling and condensation process of a heat transfer fluid which is in direct contact with the storage material,
characterised in that
it comprises 3 to 30% by volume of water, 40 to 90% by volume of a fusible material which is insoluble in water and is not dangerous to health and 0.5 to 3.0 % by volume of boiling-promotion bodies.

2. Filling medium according to claim 1,
characterised in that
the fusible material which is insoluble in water and not dangerous to health comprises C₁₆ to C₄₆ aliphatic hydrocarbons.

3. Filling medium according to claim 2,
characterised in that
the boiling-promotion bodies comprise glass bodies.

4. Filling medium according to claim 1 or one of the following claims,
characterised in that
the boiling-promotion bodies are made of such size, shape and weight that they are able to migrate into the storage material during the boiling and condensation processes.

## Revendications

1. Matière de remplissage pour un accumulateur de chaleur latente dynamique, dans lequel le transfert thermique sur un matériau accumulateur organique est réalisé par des procédés d'ébullition et de condensation d'un liquide caloporteur qui se trouve en contact direct avec le matériau accumulateur, caractérisée en ce qu'elle est constituée par 3 à 30% en volume d'eau, 40 à 90% en volume d'une matière fusionnable non soluble dans l'eau et non nocive pour la santé et de 0,5 à 3,0 % en volume de corps d'ébullition.

2. Matière de remplissage selon la revendication 1, caractérisée en ce que la substance fusionnable non soluble dans l'eau est non nocive pour la santé et constituée par des hydrocarbures aliphatiques en C₁₆ jusqu'à C₄₆.

3. Matière de remplissage selon la revendication 2, caractérisée en ce que les corps d'ébullition sont constitués par des corps de verre.

4. Matière de remplissage selon la revendication 1 ou l'une des revendications suivantes, caractérisée en ce que les corps d'ébullition sont de taille, de forme et de poids tels à pouvoir être introduits dans le matériau accumulateur au cours des procédés d'ébullition et de condensation.
